# EUROPÄISCHE PATENTSCHRIFT

(11) **EP 1 522 107 B1**
(45) Veröffentlichungstag und Bekanntmachung des Hinweises auf die Patenterteilung: **25.01.2006**
(21) Anmeldenummer: 03735579.9
(22) Anmeldetag: 07.06.2003
(51) Int. Cl.: H01M 2/10

(54) **VORRICHTUNG ZUR BEFESTIGUNG EINES GEHÄUSES, INSBESONDERE DAS EINER KRAFTFAHRZEUG-BATTERIE, AN EINER TRÄGERPLATTE**
DEVICE FOR FIXING A HOUSING, ESPECIALLY A HOUSING PERTAINING TO A MOTOR VEHICLE BATTERY, TO A CARRIER PLATE
DISPOSITIF POUR FIXER UN BOITIER, EN PARTICULIER LE BOITIER D'UNE BATTERIE DE VEHICULE AUTOMOBILE, SUR UNE PLAQUE DE SUPPORT

(30) Priorität: 06.07.2002 DE 10230492
(43) Veröffentlichungstag der Anmeldung: 13.04.2005
(73) Patentinhaber: A. Raymond & Cie, 38028 Grenoble (FR)
(72) Erfinder: BOVILLE, Daniel, F-75020 Paris (FR)
(74) Vertreter: Rüttgers, Joachim
(86) Internationale Anmeldenummer: PCT/EP2003/006010
(87) Internationale Veröffentlichungsnummer: WO 2004/006359

(56) Entgegenhaltungen:
- EP-A- 0 406 463
- EP-A- 0 429 746
- EP-A- 0 508 248
- EP-A- 0 779 668
- EP-A- 1 069 632
- DE-A- 2 037 568
- FR-A- 2 779 010
- US-A- 4 367 572

## Beschreibung

Die Erfindung bezieht sich auf eine Vorrichtung zur Befestigung eines Gehäuses, insbesondere das einer Kraftfahrzeug Batterie, an einer Trägerplatte.

Gehäuse von Kfz-Batterien haben eine im wesentlichen kubische Form. Sie stehen üblicherweise auf einer Trägerplatte, deren eines Ende federnd umgebogen ist und hinter eine Stufe an einer Seitenwand greift. Die entgegengesetzte Seitenwand weist ebenfalls eine Stufe auf, und die Trägerplatte ragt auf dieser Seite über den Gehäuseboden hinaus. Zur Befestigung des Gehäuses auf der Trägerplatte wird das eine Ende einer S-förmig gebogenen Blattfeder als Befestigungsflansch auf dieser Stufe zur Auflage gebracht, während ihr anderes Ende auf der überstehenden Trägerplatte ruht. Eine durch den flachen Mittelteil der Blattfeder und durch den überstehenden Teil der Trägerplatte hindurchgehende Schraube wird mit einer Kontermutter gesichert. Diese Art der Befestigung ist umständlich, sie erfordert eine Reihe von Handgriffen und kann nur mit Hilfe eines Werkzeugs vorgenommen und, wenn z.B. ein Austausch der Batterie notwendig wird, wieder gelöst werden; der dafür notwendige Zeitaufwand ist erheblich. Ein weiteres Problem stellt das Recycling der Flansche und Schrauben nach den europäischen Richtlinien dar.

Aufgabe der Erfindung ist es, eine Vorrichtung zur Befestigung eines Gehäuses, insbesondere das einer Kfz-Batterie, an einer Trägerplatte zu schaffen, die es erlaubt das Gehäuse mit wenigen, einfachen Handgriffen und ohne Gebrauch eines Werkzeugs am Träger zu befestigen und, allenfalls unter Gebrauch eines einfachen Werkzeugs, auch schnell wieder zu lösert. Beim wiederholten Austausch des Gehäuses bzw. der Batterie sollen nach Möglichkeit keine Schrotteile anfallen.

Erfindungsgemäß wird dies durch eine Vorrichtung, die aus einem Befestigungsbügel und einem separaten Befestigungsteil besteht, wobei der Befestigungsbügel an einem am Gehäuse überstehenden Rand der Trägerplatte befestigt oder angeformt ist und einen sich parallel und im Abstand zur Gehäusewand erstreckenden, vertikalen Schenkel aufweist und das separate Befestigungsteil in den Zwischenraum zwischen der Gehäusewand und dem vertikalen Schenkel des Befestigungsbügels einschiebbar und darin festklemmbar ist. Dies kann schnell, mit geringem Kraftaufwand und ohne Zuhilfenahme eines Werkzeugs erfolgen. Alle Teile der Befestigungsvorrichtung sind bei einem Austausch des Gehäuses wiederverwendbar, so das keine Schrott- oder Abfallteile entstehen.

Für das Festklemmen des Befestigungsteils sind vorzugsweise an der Wand des Gehäuses eine Auflagefläche für das eine Ende des Befestigungsteils und an dem vertikalen Schenkel des Befestigungsbügels Eingriffsmittel für das andere Ende des Befestigungsteils vorgesehen.

Die Auflagefläche an der Gehäusewand für das eine Ende des Befestigungsteils kann gebildet werden durch eine in Bodennähe seitlich vorspringende Stufe; für den Eingriff des anderen Endes des Befestigungsteils kann an der Innenseite des vertikalen Schenkels des Befestigungsbügels eine Hinterschneidung vorgesehen sein. Um den Eingriff sicherer zu machen, kann an der Hinterschneidung außerdem eine Nase angeformt sein.

Das separate Befestigungsteil besteht vorzugsweise aus einem oberen Teilstück und einem unteren Teilstück, die durch ein Gelenk miteinander verbunden sind, das eine knickende Bewegung zwischen den beiden Teilstücken zulässt. Diese Knickbewegung der beiden Teilstücke erlaubt es, das Befestigungsteil in eine klemmende Stellung zwischen der Gehäusewand und dem Befestigungsbügel zu bringen.

Nach einer bevorzugten Ausführungsform der Erfindung haben die beiden Teilstücke einen im wesentlichen rechteckigen Grundriss, und ihre sich am Gelenk gegenüberstehenden Seitenflächen bilden einen Winkel, der die knickende Bewegung zwischen den beiden Teilstücken zulässt.

Vorzugsweise ist an der Stimfläche am freien Ende des oberen Teilstücks eine quer verlaufende Rippung für den Eingriff an der Hinterschneidung des vertikalen Schenkels des Befestigungsbügels vorgesehen. Diese Rippung kann auch an der Stirnfläche eines am oberen Teilstück angeformten Aufsatzes ausgebildet sein.

Im oberen Teilstück befindet sich vorteilhaft eine Öffnung, in die mit einem einfachen Werkzeug, z.B. einen Schraubenzieher, gefasst werden kann, um bei Bedarf die Klemmung des Befestigungsteils zwischen Gehäusewand und Befestigungsbügel wieder zu lösen.

Die beabsichtigte Klemmwirkung wird verbessert, wenn das untere Teilstück vom Gelenk aus hin zu seinem freien Ende an Höhe zunimmt; die Stimfläche am freien Ende ist dann steil abfallend, und daran ist eine Abstützfläche ausgebildet, die an der Seitenwand des Gehäuses, vorzugsweise an der dort durch eine Stufe gebildeten Auflagefläche, in Anlage gebracht werden kann. Die vom Gelenk aus ansteigende Fläche des Teilstücks kann in Anlage gebracht werden an einer an der Innenseite des vertikalen Schenkels des Befestigungsbügels ausgebildeten Abstützkante, so dass das untere Teilstück an mindestens zwei Punkten abgestützt wird, während das obere Teilstück in Eingriff gebracht wird am vertikalen Schenkel des Befestigungsbügels, wodurch eine sichere Klemmwirkung erzielt wird.

Nach einer Ausführungsform der Erfindung besteht das obere Teilstück aus einem dünnwandigen, ebenen Boden und dünnwandigen Seitenwänden und das untere Teilstück aus einem dünnwandigen, vom Gelenk aus ansteigenden Boden und dünnwandigen Seitenwänden. Die gelenkige Verbindung ist dann an den Kanten der einander zugewandten, einen Winkel bildenden Seitenwänden der Schmalseiten der Teilstücke hergestellt.

Am unteren Teilstück können seitlich abstehende Ansätze vorgesehen sein, deren Stirnflächen mit der Abstützfläche am freien Ende des Teilstücks fluchten, wodurch die Abstützfläche des unteren Teilstücks insgesamt vergrößert wird.

Die Erfindung wird im folgenden anhand der anhängenden Zeichnung beispielhaft näher beschrieben; es zeigen
- Fig. 1 bis 3: die erfindungsgemäße Befestigungsvorrichtung für ein Gehäuse und den Vorgang der Befestigung am Beispiel einer Kfz-Batterie,
- Fig. 4: eine perspektivische Darstellung eines Befestigungsteils der Vorrichtung,
- Fig. 5: die Draufsicht auf das Befestigungsteil gemäß Fig. 4,
- Fig. 6: eine Seitenansicht des Befestigungsteils gemäß Fig. 4,
- Fig. 7: die Vorderansicht des Befestigungsteils gemäß Fig. 4,
- Fig. 8: eine Seitenansicht eines Befestigungsbügels als Gegenstück zum Befestigungsteil gemäß Fig. 4,
- Fig. 9: die Innenansicht des Befestigungsbügels gemäß Fig. 8 und
- Fig. 10: die Draufsicht auf den Befestigungsbügel gemäß Fig.8.

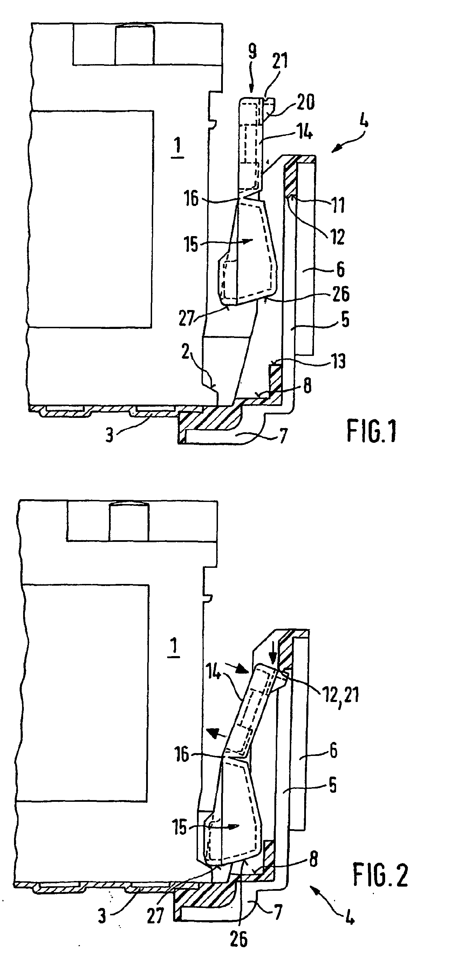

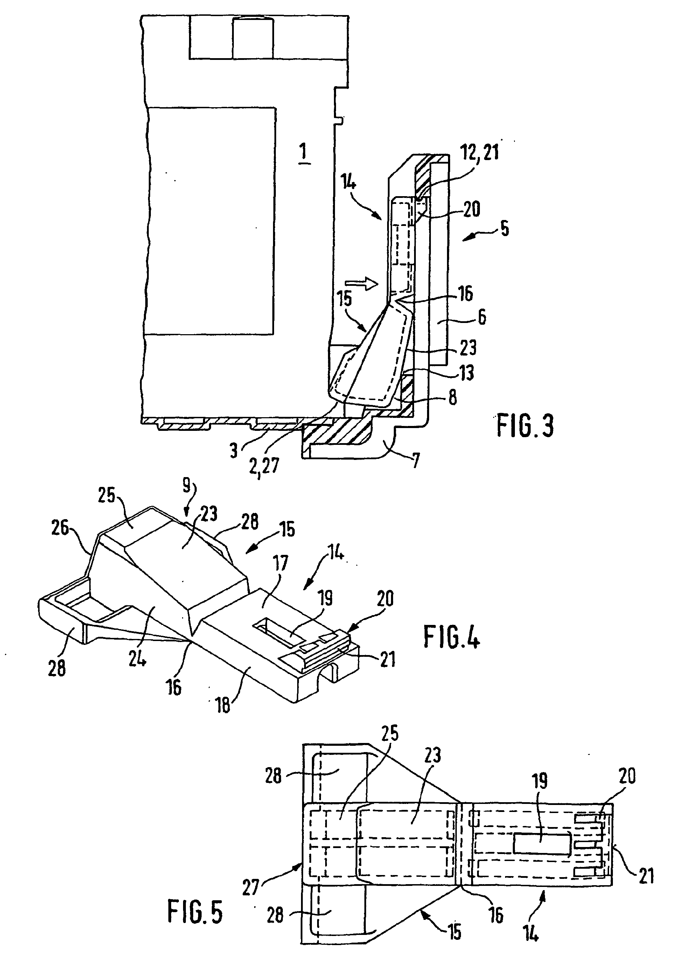

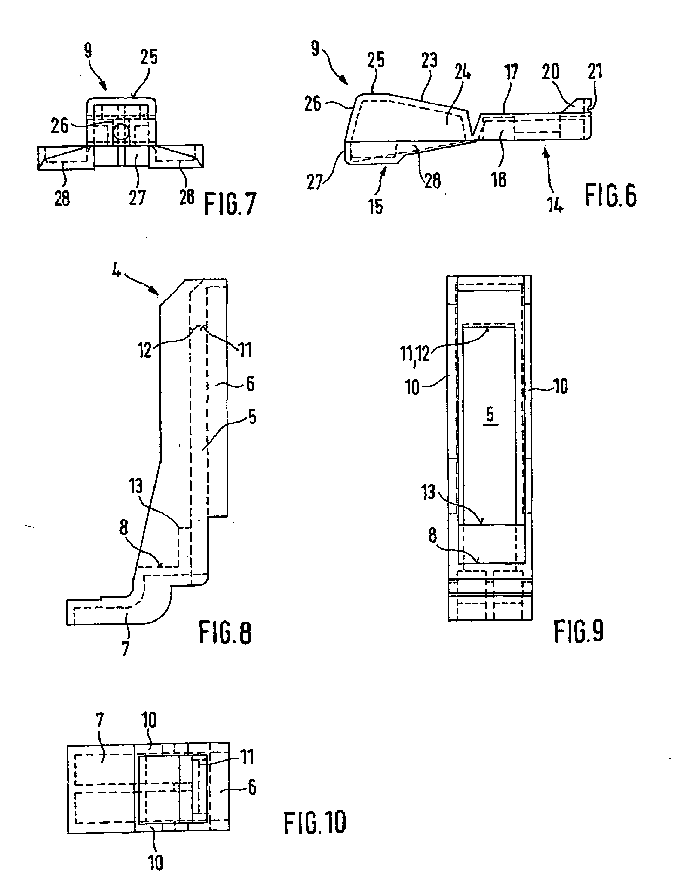

In Fig. 1 ist schematisch ein Teil des Gehäuses **1** einer Kraftfahrzeug-Batterie dargestellt, die, in an sich bekannter Weise, seitlich über ihrem Boden eine Stufe **2** aufweist, die bevorzugt leicht abfallend ausgebildet ist. Sie steht auf einer Trägerplatte **3,** die auf dieser Seite über das Gehäuse **1** hinausragt. An dieser Seite der Trägerplatte **3** ist ein Befestigungsbügel **4** vorgesehen, der an die Trägerplatte **3** einstückig angeformt oder anderweitig fest mit ihr verbunden sein kann. Vom Befestigungsbügel **4,** der in den Fig. 8 bis 10 nochmals separat dargestellt ist, erstreckt sich ein langer, vertikaler Schenkel **5** parallel und im Abstand zur Seitenwand des Gehäuses **1.** Vorzugsweise ist an seiner Außenseite eine Verstärkungsrippe **6** vorgesehen. Ein kürzerer, horizontaler Schenkel **7** dient zum einen der Befestigung an der Trägerplatte **3** und bildet zumindest auf der Innenseite des Befestigungsbügels **4** mit dem vertikalen Schenkel **5** einen rechten Winkel, so dass hier eine waagrechte Auflagefläche **8** für ein separates Befestigungsteil **9** entsteht, das, wie weiter unten anhand der Fig. 1 bis 3 beschrieben, zwischen der Seitenwand des Gehäuses **1** und der Innenfläche des vertikalen Schenkels **5** des Befestigungsbügels **4** einzuführen und zu verklemmen ist. Seitenwände **10** am vertikalen Schenkel **5** des Befestigungsbügels **4** dienen einerseits der Versteifung des Bügels **4** und andererseits der Sicherung des Befestigungsteils **9.** Eine Hinterschneidung **11** am freien Ende des vertikalen Schenkels **5,** die an ihrer Vorderkante eine kleine Nase **12** aufweist, dient der Klemmbefestigung des Befestigungsteils **9** im Befestigungsbügel **4** (s. unten). Außerdem ist im Winkelbereich des Befestigungsbügels **4** an der Innenseite des vertikalen Schenkels **5** eine Abstufung vorgesehen, die eine Abstützkante **13** für das Befestigungsteil **9** bietet.

Fig. 4 bis Fig. 7 zeigen eine bevorzugte Ausführungsform des Befestigungsteils **9.** Es besteht aus zwei, in ihrem Grundriss rechteckigen Teilstücken **14, 15,** die durch ein Gelenk **16** miteinander verbunden sind. In der dargestellten Ausführungsform besteht das obere Teilstück **14** aus einem verhältnismäßig dünnwandigen Boden **17** und versteifenden Seitenwänden **18,** die ihm die Form einer flachen Schachtel geben. Im Boden **17** ist eine schlitzförmige Öffnung **19** vorgesehen als möglicher Eingriff für ein einfaches Werkzeug, z.B. einen Schraubenzieher. An der einen, freien Schmalseite des oberen Teilstücks **14** ist außen am Boden **17** ein sich über die gesamte Breite erstreckender Ansatz **20** mit einem hier trapezförmigen Querschnitt vorgesehen, dessen mit der schmalen Seitenwand des Teilstücks **14** fluchtende Fläche mit einer quer verlaufenden Rippung **21** versehen ist. Auf der Oberseite des Ansatzes **20** können Laschen ausgebildet sein. Die gelenkige Verbindung **16** mit dem unteren Teilstück **15** ist an der Kante der entgegengesetzten Schmalseite hergestellt. Die sich hier gegenüberstehenden Seitenwände der beiden Teilstücke **14, 15** sind vom Gelenk **16** aus leicht voneinander weg geneigt, bilden so einen Winkel, der eine gelenkige Bewegung zwischen den beiden Teilstücken **14, 15** zuläßt.

Auch das zweite, untere Teilstück **15** besteht aus einem dünnwandigen Boden **23** mit versteifenden Seitenwänden **24,** jedoch steigt der Boden **23** von der Wand der dem oberen Teilstück **14** gegenüber liegenden Schmalseite aus an, so dass das untere Teilstück **15** zu seinem freien Ende hin bis zu einem abgeflachten Streifen **25** an Höhe zunimmt, von dem aus eine steil abfallende, freie Schmalseite **26** ausgebildet ist, die in eine senkrechte Abstützfläche **27** übergeht. Seitlich am Teilstück **15** können flügelartige Ansätze **28** angeformt sein, die der Versteifung des Teilstücks **15** dienen und außerdem die Abstützfläche **27** vergrößern.

Die Befestigung des Gehäuses **1** auf der Trägerplatte **3** geschieht gemäß Fig. 1 bis Fig. 3 in folgender Weise:

Das Gehäuse **1** wird auf die Trägerplatte **3** aufgestellt und, z.B. wie bisher, mit der an ihrer einen Seitenwand knapp über seinem Boden ausgebildeten Stufe (in der Zeichnung nicht dargestellt) unter den federnd umgebogenen Rand der einen Seitenkante der Trägerplatte **3** geschoben, so dass hier schon eine Fixierung erreicht wird. Der vertikale Schenkel **5** des Befestigungsbügels **4** steht danach parallel und im Abstand zur entgegengesetzten Seitenwand des Gehäuses **1.** Das Befestigungsteil **9** wird nun mit dem unteren, zu seinem freien Ende hin an Höhe zunehmenden Teilstück **15** voraus in den Zwischenraum zwischen der Seitenwand des Gehäuses **1** und dem vertikalen Schenkel **5** des Befestigungsbügels **4** eingeführt (s. Fig. 1). Mit der Kante seiner am freien Ende ausgebildeten Abstützfläche **27** kommt es dabei zur Anlage auf der an der Seitenwand des Gehäuses **1** befindlichen Stufe **2.** Auf Grund der gelenkigen Verbindung **16** zwischen dem unteren Teilstück **15** und dem oberen Teilstück **14** des Befestigungsteils **9** kann nun eine den Winkel zwischen den sich gegenüberstehenden Seitenflächen der Teilstücke **14, 15** schließende, knickende Bewegung des oberen Teilstücks **14** erfolgen, so dass sich dieses winklig zum unteren Teilstück stellt und die am freien Ende des oberen Teilstücks **14** vorgesehene Rippung **21** in Eingriff gebracht werden kann mit der Nase **12** an der Hinterschneidung **11** des Befestigungsbügels **4** (s. Fig. 2). In dem nun im Bereich des Gelenks **16** eine der vorhergehenden Knickbewegung entgegengerichtete Kraft auf das Befestigungsteil **9** ausgeübt wird, wird dessen oberes Teilstück **14** mit seinem Boden **17** wieder parallel zum vertikalen Schenkel **5** des Befestigungsbügels **4** gestellt, und das untere Teilstück **15** führt seinerseits eine den Winkel zwischen den beiden sich gegenüberstehenden Seitenflächen der Teilstücke **14, 15** öffnende, knickende Bewegung im Gelenk **16** aus, wobei es mit seiner am freien Ende ausgebildeten Abstützfläche **27** vollends auf die abfallende Stufe **2** an der Seitenwand des Gehäuses **1** gleitet und sich schließlich mit seinem schrägen Boden **23** an der durch eine Abstufung an der Innenseite des vertikalen Schenkels **5** gebildeten Abstützkante **13** abstützt. Bei dieser Knickbewegung wird ein Punkt erreicht, an dem das Befestigungsteil **9** nicht mehr selbsttätig aus dieser Stellung zurückspringen kann. Es ergibt sich eine dauerhafte Klemmwirkung, die das Gehäuse **1** sicher auf der Trägerplatte **3** hält.

Dieser Vorgang kann praktisch ohne Zuhilfenahme eines Werkzeugs erfolgen. Um das Gehäuse **1** aus der Halterung zu lösen, kann mit einem einfachen Werkzeug, z.B. einem Schraubenzieher, in die im Boden **17** des Teilstücks **14** vorgesehene Öffnung **19** eingegriffen werden und das Befestigungsteil **9** aus seiner klemmenden Stellung gelöst werden.

## Patentansprüche

1. Vorrichtung zur Befestigung eines Gehäuses, insbesondere das einer Kraftfahrzeug Batterie, an einer Trägerplatte, **dadurch gekennzeichnet, dass** die Vorrichtung aus einem Befestigungsbügel **(4)** und einem separaten Befestigungsteil **(9)** besteht, wobei der Befestigungsbügel **(4)** an einem am Gehäuse **(1)** überstehenden Rand der Trägerplatte **(3)** befestigt oder angeformt ist und einen sich parallel und im Abstand zur Gehäusewand erstreckenden, vertikalen Schenkel **(5)** aufweist und das separate Befestigungsteil **(9)** in den Zwischenraum zwischen der Gehäusewand und dem vertikalen Schenkel **(5)** des Befestigungsbügels **(4)** einschiebbar und darin festklemmbar ist.

2. Vorrichtung nach Anspruch 1, **dadurch gekennzeichnet, dass** an der Wand des Gehäuses **(1)** eine Auflagefläche für das eine Ende des Befestigungsteils **(9)** und an dem vertikalen Schenkel **(5)** des Befestigungsbügels **(4)** Eingriffsmittel für das andere Ende des Befestigungsteils **(9)** vorgesehen sind.

3. Vorrichtung nach Anspruch 1, **dadurch gekennzeichnet, dass** an der Gehäuse wand in Bodennähe eine seitlich vorspringende Stufe **(2)** vorgesehen ist, die eine Auflagefläche für das eine Ende des Befestigungsteils **(9)** bildet, und an der Innenseite des vertikalen Schenkels **(5)** des Befestigungsbügels **(4)** eine Hinterschneidung **(11)** für den Eingriff des anderen Endes des Befestigungsteils **(9)** vorgesehen ist.

4. Vorrichtung nach Anspruch 3, **dadurch gekennzeichnet, dass** an der Hinterschneidung **(11)** eine Nase **(12)** für den Eingriff des Befestigungsteils **(9)** angeformt ist.

5. Vorrichtung nach Anspruch 1, **dadurch gekennzeichnet, dass** das Befestigungsteil **(9)** aus einem oberen Teilstück **(14)** und einem unteren Teilstück **(15)** besteht, die durch ein Gelenk **(16)** miteinander verbunden sind, das eine knickende Bewegung zwischen den beiden Teilstücken **(14, 15)** zuläßt.

6. Vorrichtung nach Anspruch 5, **dadurch gekennzeichnet, dass** die beiden Teilstücke **(14, 15)** einen im wesentlichen rechteckigen Grundriss haben und ihre sich am Gelenk **(16)** gegenüberstehenden Seitenflächen einen Winkel bilden, der eine knickende Bewegung zwischen den beiden Teilstücken **(14, 15)** zuläßt.

7. Vorrichtung nach Anspruch 5, **dadurch gekennzeichnet, dass** an der Stimfläche am freien Ende des oberen Teilstücks **(14)** eine quer verlaufende Rippung **(21)** für den Eingriff am vertikalen Schenkel **(5)** des Befestigungsbügels **(4)** vorgesehen ist.

8. Vorrichtung nach Anspruch 5, **dadurch gekennzeichnet, dass** am freien Ende des oberen Teilstücks **(14)** ein Aufsatz **(20)** angeformt ist, dessen Stimfläche mit einer quer verlaufenden Rippung **(21)** für den Eingriff am vertikalen Schenkel **(5)** des Befestigungsbügels **(4)** versehen ist.

9. Vorrichtung nach Anspruch 5, **dadurch gekennzeichnet, dass** im oberen Teilstück **(14)** eine Öffnung **(19)** vorgesehen ist.

10. Vorrichtung nach Anspruch 5, **dadurch gekennzeichnet, dass** das untere Teilstück **(15)** vom Gelenk **(16)** aus hin zu seinem freien Ende an Höhe zunimmt, die Stimfläche am freien Ende steil abfallend ist und an dieser Stimfläche eine Abstützfläche **(27)** ausgebildet ist, die an der Seitenwand des Gehäuses **(1)** in Anlage bringbar ist.

11. Vorrichtung nach Anspruch 9, **dadurch gekennzeichnet, dass** die vom Gelenk **(16)** aus ansteigende Fläche des Teilstücks **(15)** in Anlage an einer an der Innenseite des vertikalen Schenkels **(5)** des Befestigungsbügels **(4)** ausgebildeten Abstützkante **(13)** bringbar ist.

12. Vorrichtung nach Anspruch 5, **dadurch gekennzeichnet, dass** das obere Teilstück **(14)** aus einem dünnwandigen, ebenen Boden **(17)** und dünnwandigen Seitenwänden **(18)** und das untere Teilstück **(15)** aus einem dünnwandigen, vom Gelenk **(16)** aus ansteigenden Boden **(23)** und dünnwandigen Seitenwänden **(24)** besteht und dass die gelenkige Verbindung **(16)** an den Kanten der einander zugewandten, einen Winkel bildenden Seitenwänden der Schmalseiten der Teilstücke **(14, 15)** hergestellt ist.

13. Vorrichtung nach Anspruch 5, **dadurch gekennzeichnet, dass** am unteren Teilstück **(15)** seitlich abstehende Ansätze **(28)** vorgesehen sind, deren Stimflächen mit der Abstützfläche **(27)** am freien Ende des Teilstücks **(15)** fluchten.

## Claims

1. Device for fixing a casing or housing, particularly that of a motor vehicle battery, to a carrier plate, **characterised in that** the device comprises a fixing bracket (4) and a separate fixing part (9), the fixing bracket (4) being fastened to or integrally formed on an edge of the carrier plate (3) which projects beyond the casing or housing (1) and having a vertical limb (5) which extends parallel to and at a distance from the wall of the casing or housing, and the separate fixing part (9) being insertable in the interstice between the wall of the casing or housing and the vertical limb (5) of the fixing bracket (4) and being clampable therein.

2. Device according to claim 1, **characterised in that** a supporting surface for one end of the fixing part (9) is provided on the wall of the casing or housing (1) and engagement means for the other end of the fixing part (9) are provided on the vertical limb (5) of the fixing bracket (4).

3. Device according to claim 1, **characterised in that** a laterally projecting step (2), which forms a supporting surface for one end of the fixing part (9), is provided on the casing or housing wall close to the floor thereof, and an undercut (11) for engaging with the other end of the fixing part (9) is provided on the inside of the vertical limb (5) of the fixing bracket (4).

4. Device according to claim 3, **characterised in that** a nose (12) for engaging the fixing part (9) is integrally formed on the undercut (11).

5. Device according to claim 1, **characterised in that** the fixing part (9) comprises an upper portion (14) and a lower portion (15) which are connected together by a joint (16) which allows a bending movement between the two portions (14, 15).

6. Device according to claim 5, **characterised in that** the two portions (14, 15) are substantially rectangular in outline, and their side-faces which are positioned opposite one another at the joint (16) make an angle which allows a bending movement between the two portions (14, 15).

7. Device according to claim 5, **characterised in that** transversely extending ribbing (21) for engaging with the vertical limb (5) of the fixing bracket (4) is provided on the end-face at the free end of the upper portion (14).

8. Device according to claim 5, **characterised in that** there is integrally formed at the free end of the upper portion (14) a projection (20) whose end-face is provided with transversely extending ribbing (21) for engaging with the vertical limb (5) of the fixing bracket (4).

9. Device according to claim 5, **characterised in that** an opening (19) is provided in the upper portion (14).

10. Device according to claim 5, **characterised in that** the lower portion (15) increases in height from the joint (16) to its free end, the end-face at the free end slopes down steeply, and there is formed at the said end-face a bracing surface (27) which can be brought into contact with the side-wall of the casing or housing (1).

11. Device according to claim 9, **characterised in that that** surface of the portion (15) which slopes up from the joint (16) can be brought into contact with a bracing edge (13) which is formed on the inside of the vertical limb (5) of the fixing bracket (4).

12. Device according to claim 5, **characterised in that** the upper portion (14) comprises a thin-walled, plane floor (17) and thin-walled side-walls (18) and the lower portion (15) comprises a thin-walled floor (23) which slopes up from the joint (16) and thin-walled side-walls (24), and **in that** the jointed connection is made at the edges of those side-walls of the narrow sides of the portions (14, 15) which face towards one another and make an angle.

13. Device according to claim 5, **characterised in that** there are provided on the lower portion (15) wings (28) which project laterally and whose end-faces are in line with the bracing surface (27) at the free end of the portion (15).

## Revendications

1. Dispositif pour la fixation d'un boîtier, notamment du bac d'une batterie de véhicule automobile, sur une plaque support, **caractérisé en ce que** le dispositif se compose d'un étrier de fixation (4) et d'un organe de fixation séparé (9), l'étrier de fixation étant en l'occurrence fixé sur ou réalisé solidaire par formage d'un rebord de la plaque support (3) formant saillie par rapport au boîtier (1) et comportant un élément vertical (5) s'étendant parallèlement à la paroi du boîtier et à une certaine distance de celle-ci et l'organe de fixation séparé (9) étant destiné à être inséré dans l'espace de séparation existant entre la paroi du boîtier et l'élément vertical (5) de l'étrier de fixation (4) et à être bloqué en position dans celui-ci.

2. Dispositif selon la revendication 1, **caractérisé en ce qu'**il est prévu, au niveau de la paroi du boîtier (1), une surface d'assise pour une extrémité de l'organe de fixation (9) et sur l'élément vertical (5) de l'étrier de fixation (4) des moyens de mise en prise d'encastrement pour l'autre extrémité de l'organe de fixation (9).

3. Dispositif selon la revendication 1, **caractérisé en ce qu'**il est prévu sur la paroi du boîtier, au voisinage de celui-ci, un décrochement (2) faisant saillie sur le côté, qui définit une surface d'assise pour une extrémité de l'organe de fixation (9) et **en ce qu'**il est prévu, au niveau de la face intérieure de l'élément vertical (5) de l'étrier de fixation (4) un détalonnage (11) pour l'accrochage en prise d'encastrement de l'autre extrémité de l'organe de fixation (9).

4. Dispositif selon la revendication 3, **caractérisé en ce qu'**un ergot (12) pour l'accrochage en prise d'encastrement de l'organe de fixation (9) est réalisé solidaire par formage du détalonnage (11).

5. Dispositif selon la revendication 1, **caractérisé en ce que** l'organe de fixation (9) se compose d'un tronçon supérieur (14) et d'un tronçon inférieur (15), qui sont raccordés ensemble au moyen d'une articulation (16) qui autorise un mouvement d'inflexion entre les deux tronçons (14, 15).

6. Dispositif selon la revendication 5, **caractérisé en ce que** les deux tronçons (14, 15) ont une configuration en projection horizontale essentiellement rectangulaire et **en ce que** leurs faces latérales se faisant respectivement face définissent un angle qui permet la réalisation d'un mouvement d'inflexion entre les deux tronçons (14, 15).

7. Dispositif selon la revendication 5, **caractérisé en ce qu'**il est prévu, sur la face antérieure de l'extrémité libre du tronçon (14) un ensemble de nervures (21) à disposition transversale qui permet d'engager l'étrier de fixation (4) en prise d'encastrement sur l'élément vertical (5).

8. Dispositif selon la revendication 5, **caractérisé en ce qu'**un rehaussement (20) est réalisé solidaire par formage de l'extrémité libre du tronçon supérieur (14) dont la face antérieure est munie d'un ensemble de nervures à disposition transversale (21) permettant d'engager l'étrier de fixation (4) en prise d'encastrement sur l'élément vertical (5).

9. Dispositif selon la revendication 5, **caractérisé en ce qu'**une ouverture (19) est prévue dans le tronçon supérieur (14).

10. Dispositif selon la revendication 5, **caractérisé en ce que** la hauteur du tronçon (15) va en augmentant, depuis l'articulation (16), en direction de son extrémité libre, que la face antérieure de son extrémité libre a une configuration en pente très accentuée et qu'il est prévu au niveau de cette face antérieure une surface d'appui (27) qui est destinée à venir s'insérer en butée contre la paroi latérale du boîtier (1).

11. Dispositif selon la revendication 9, **caractérisé en ce que** la face montante depuis l'articulation (16) du tronçon (15) est destinée à être amenée en contact de butée sur une arête d'appui (13) prévue à cet effet sur la face intérieure de l'élément vertical (5) de l'étrier de fixation (4).

12. Dispositif selon la revendication 5, **caractérisé en ce que** le tronçon supérieur (14) se compose d'un fond plat d'épaisseur de paroi réduite (17) et de parois latérales de faible épaisseur (18), **en ce que** le tronçon inférieur (15) se compose d'un fond d'épaisseur réduite (23) qui va en augmentant à partir du point d'articulation et de parois latérales de faible épaisseur (24) et **en ce que** la liaison articulée (16) est réalisée au niveau des bords des parois latérales, définissant une configuration angulaire, des petits côtés des tronçons (14, 15) se faisant respectivement face.

13. Dispositif selon la revendication 5, **caractérisé en ce qu'**il est prévu, au niveau du tronçon inférieur (15) des épaulements (28) faisant saillie sur le côté, dont les faces antérieures sont disposées dans l'alignement de la surface d'appui (27) de l'extrémité libre du tronçon (15).
